# EUROPEAN PATENT APPLICATION

(11) **EP 4 654 644 A1**
(43) Date of publication of application: **26.11.2025**
(21) Application number: 24744623.0
(22) Date of filing: 15.01.2024
(51) Int. Cl.: H04W 16/14, H04W 16/26, H04W 84/18

(54) **NODE, SYSTEM, METHOD, AND PROGRAM**

(30) Priority: 16.01.2023 JP 2023004570
(71) Applicant: PicoCELA Inc., Tokyo 103-0013 (JP)
(72) Inventor: KOJIMA, Yuki, Tokyo 103-0013 (JP)
(74) Representative: Bjerkén Hynell KB
(86) International application number: PCT/JP2024/000828
(87) International publication number: WO 2024/154700

(57) **Abstract**

This node used for a wireless backhaul system comprises: an access line communication unit which uses a first channel to communicate with a terminal device; a backhaul line communication unit which uses a second channel to communicate with an adjacent node and transmits, to the adjacent node, monitor channel information indicating a third channel; and a monitor unit which monitors radar waves with respect to the third channel.

## Description

### Technical Field

The present disclosure relates to a node, a system, a method, and a program.

### Background Art

In accordance with Japanese laws and regulations, a node that performs wireless communication in a 5 GHz band needs to have a function of suspending communication within 10 seconds in a case where any of various radar waves such as a weather radar is detected, and then switching to another channel in which no radar wave is detected. This function is called dynamic frequency selection (DFS).

In addition, in accordance with the laws and regulations, in a case where the node switches to a new channel, the node needs to perform detection (hereinafter, referred to as "monitoring") of a radar wave for 1 minute before using the new channel, and further, a channel in which the radar wave is detected cannot be used for communication for 30 minutes after the detection of the radar wave.

Therefore, in order to shorten a time during which communication is suspended, a so-called high-speed DFS is performed in which a node performs, in advance, monitoring for a radar wave on a channel that is not being used, and uses the channel being monitored (hereinafter, referred to as a "monitoring channel") for communication in a case where a radar wave is detected on a channel that is being used.

Patent Literature (hereinafter, referred to as "PLT") 1 describes an invention in which, in a case where an access point (AP) detects a radar wave, the AP updates a management table and sends a management table update request via a priority LAN, so that each AP holds a common management table, thereby enabling continuation of communication with an associated terminal even after channel switching.

PTL 2 describes an invention in which, in a case where a radar wave is detected, existing AP information is indicated to an associated terminal, and the terminal switches an AP as a connection destination, so that continuation of communication is enabled.

PTL 3 describes an invention that enables notification of detecting a radar wave within 10 seconds before disconnection by shortening a transmission interval of beacons in order to perform DFS in an ad hoc mode in a multi-hop environment.

PTL 4 describes an invention in which monitoring for a radar wave is performed in advance on a channel that is not being used, and in a case where each AP detects a radar wave on an access channel used for communication with a terminal, each AP switches to a channel on which the monitoring for the radar wave is performed, as the access channel.

### Citation List

### Patent Literature

PTL 1
   Japanese Patent Application Laid-Open No. 2007-214713
PTL 2
   Japanese Patent Application Laid-Open No. 2008-011387
PTL 3
   Japanese Patent Application Laid-Open No. 2009-141901
PTL 4
   Japanese Patent Application Laid-Open No. 2010-278825

### Summary of Invention

In a wireless backhaul system that constructs a network that connects nodes to each other wirelessly (hereinafter, referred to as a "mesh network"), all the nodes connect to other nodes using the same channel. Therefore, in a case where any one node (for example, node X) of the wireless backhaul system detects a radar wave on a channel that is being used, at least the node is required to switch to another channel in accordance with the laws and regulations.

As described above, in accordance with the laws and regulations, it is necessary to monitor for a radar wave for 1 minute in each node, so that disconnection of 1 minute or longer occurs in the node until the node that detects the radar wave completes the change of the channel. Therefore, it is required to shorten the time during which communication is suspended even in the wireless backhaul system.

However, even in a case where the channel is switched per node detecting a radar wave, nodes that use a plurality of channels are mixed in the same wireless backhaul system, making it difficult to maintain a mesh communication network. So far, high-speed DFS in a case where all nodes use a common channel, as in the wireless backhaul system, has not been studied.

A node used in a wireless backhaul system according to one aspect includes: an access line communication section that communicates with a terminal device using a first channel; a backhaul line communication section that communicates with a neighboring node using a second channel and that transmits monitoring channel information indicating a third channel to the neighboring node; and a monitoring section that monitors the third channel for a radar wave.

A wireless backhaul communication system according to one aspect includes: a first node including: a first access line communication section that communicates with a terminal device using a first channel, a first backhaul line communication section that communicates with a neighboring node using a second channel, a first monitoring section that monitors a third channel for a radar wave, and a first control section that sets the third channel and causes the first backhaul line communication section to transmit monitoring channel information indicating the third channel to the neighboring node; and a second node including a second access line communication section that communicates with a terminal device using a fourth channel, a second backhaul line communication section that communicates with a neighboring node using the second channel, a second monitoring section that monitors the third channel for the radar wave, and a second control section that, in a case where the second backhaul line communication section receives the monitoring channel information indicating the third channel, causes the second backhaul line communication section to forward the monitoring channel information to the neighboring node.

### Advantageous Effects of Invention

According to a non-limiting aspect of the present disclosure, all nodes constituting the wireless backhaul system monitor the same monitoring channel, and in a case where a radar wave is detected on a channel that is being used, all the nodes simultaneously switch to the same monitoring channel, so that communication via the wireless backhaul system can be quickly resumed.

### Brief Description of Drawings

FIG. 1 is a diagram showing an exemplary configuration of a wireless communication system;
FIG. 2 is a block diagram showing an internal configuration of a node;
FIG. 3 is a flowchart showing an operation of a CN;
FIG. 4 is a flowchart showing an operation of an SN; and
FIG. 5 is a sequence diagram showing an operation of each node.

### Description of Embodiments

Hereinafter, an embodiment will be described with reference to the drawings as appropriate. The same elements throughout the present specification are denoted by the same reference signs unless otherwise noted. The matters described below together with the accompanying drawings are provided for describing an exemplary embodiment and not for indicating a sole embodiment. For example, in a case where an order of operations is indicated in the embodiment, the order of operations may be appropriately changed as long as there is no inconsistency as a whole operation.

In a case where a plurality of embodiments and/or variations is exemplified, some configurations, functions and/or operations in a given embodiment and/or variation may be included in another embodiment and/or variation or may be replaced with corresponding configurations, functions and/or operations in another embodiment and/or variation as long as there is no inconsistency.

Further, a detailed description more than necessary may be omitted in the embodiment. For example, a detailed description of a publicly-known or well-known technical matter may be omitted in order to facilitate the understanding of those skilled in the art by avoiding unnecessary redundancy of a description and/or an ambiguous technical matter or concept. Further, a duplicate description for a substantially identical configuration, function and/or operation may be omitted.

The accompanying drawings and the following description are provided in order to aid in the understanding of the embodiment, and are not intended to limit the subject matter described in the claims. Further, the terms used in the following description may also be appropriately replaced with other terms in order to aid those skilled in the art in their understanding.

### <System Configuration Example>

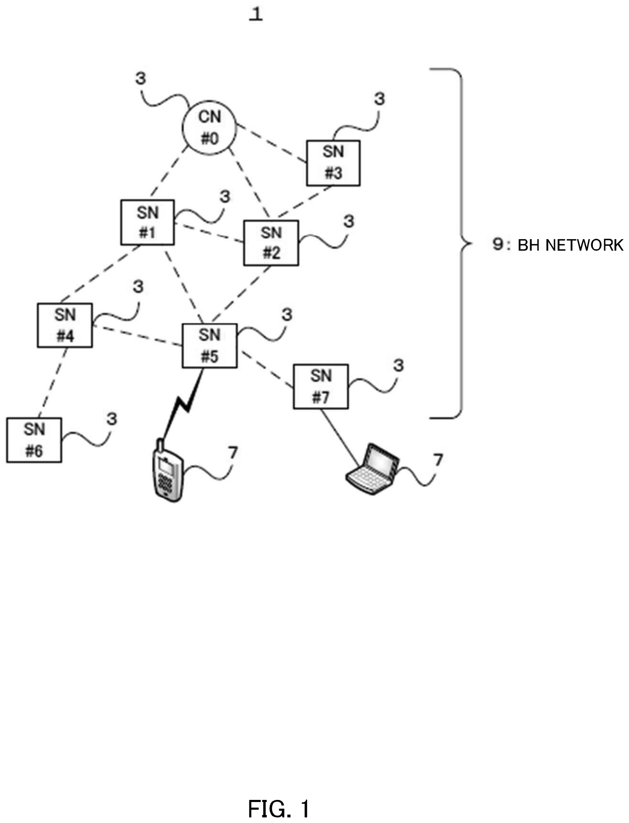

FIG. 1 is a diagram showing an exemplary configuration of a wireless communication system according to an embodiment. Wireless communication system 1 shown in FIG. 1 includes, for example, a plurality of nodes 3 and terminal devices 7. In FIG. 1, as a non-limiting example, eight nodes 3 assigned with node numbers #0 to #7 are shown. Terminal devices 7 may be connected to node 3. The number of nodes 3 may be 2 or more and less than 7, or 9 or more. The number of terminal devices 7 also does not have to be 2, and a plurality of terminal devices may be connected to one node.

Each node 3 is an example of a wireless device capable of wireless communication. Therefore, each node 3 may be referred to as "wireless node 3." A communication protocol conforming to (or based on) wireless local area network (LAN)-related standards such as IEEE802.11b/g/a/n/ac/ad/ay/ax may be applied to the wireless communication.

Individual nodes 3 form an area in which wireless communication is possible. The "area in which wireless communication is possible" may be referred to as a "wireless communication area," a "wireless area," a "communication area," a "service area," a "coverage area," a "cover area," or the like. The "area in which wireless communication is possible" formed by nodes 3 based on or conforming to the wireless LAN-related standards may be understood as corresponding to a "cell" which is a term used in cellular communication. For example, the "area in which wireless communication is possible" formed by each node 3 may be understood as corresponding to a "femtocell" classified as a "small cell."

Each node 3 can perform wireless communication with another node 3 in a case where the other node 3 is located in the "area in which wireless communication is possible." A neighboring node to a certain node is a node that can directly communicate with the certain node. The plurality of nodes 3 form wireless BH network 9, for example, by a wireless backhaul (BH) line that wirelessly relays communication between node 3 and node 3. The "wireless BH network" may be referred to as a "BH network" by omitting "wireless."

Node 3 may be referred to as a base station, an access point (AP), a relay node, or a wireless node. Terminal device 7 may be referred to as a station (STA). A wireless access line on which node 3 and terminal device 7 perform wireless communication may be referred to as an access channel or an access network. BH may be replaced with relay. The term "neighboring" may be replaced with "adjacent" or "vicinity." In these terms, "wireless" may be omitted, and "BH" may be replaced with "relay."

In the following description, the term "signal" may be replaced with a term of units into which the signal is temporally divided, such as "frame" or "packet."

A channel that can be used by a node can be used for both the wireless BH line and the wireless access line. Different frequencies (channels) may be assigned to the wireless BH line and the wireless access line. As a non-limiting example, channels in a 5 GHz band (for example, 5.15 to 5.85 GHz) may be assigned to the wireless BH line.

Channels in a 2.4 GHz band (for example, 2.412 to 2.472 GHz) may be assigned to the wireless access line. A frequency in the 5 GHz band may be assigned to the wireless access line as long as the frequency is different from a frequency assigned to the wireless BH line.

The 5 GHz band may include, for example, at least one of a 5.2 GHz band (W52: 5150 to 5250 MHz), a 5.3 GHz band (W53: 5250 to 5350 MHz), or a 5.6 GHz band (W56: 5470 to 5725 MHz).

The number of channels that can be used in W52 is four channels of 36ch, 40ch, 44ch, and 48ch. The number of channels that can be used in W53 is four channels of 52ch, 56ch, 60ch, and 64ch. The number of channels that can be used in W56 is 12 channels of 100ch, 104ch, 108ch, 112ch, 116ch, 120ch, 124ch, 128ch, 132ch, 136ch, 140ch, and 144ch.

Therefore, for example, in a case where one or two frequency bands of W52, W53, or W56 are assigned to the wireless access line, one or two frequency bands of the remaining W52, W53, and W56, which are not assigned to the access line, may be assigned to the wireless BH line.

Node #0 may be referred to as a "core node (CN)" or a "central base station." Among the plurality of nodes 3 forming BH network 9, individual nodes 3 excluding CN #0 may be referred to as "slave nodes (SNs)" or "peripheral base stations." For example, in FIG. 1, all of nodes #1 to #7 are SNs. CN 3 is an example of a "first node," and each SN 3 is an example of a "second node."

In FIG. 1, #0 to #7 assigned to individual nodes 3 are examples of information used for identifying individual nodes 3 (hereinafter, may be abbreviated as "node identification information"). The node identification information may be any information that can uniquely identify individual nodes 3 in the same BH network 9, and may be, for example, a node number, an identifier of a device, address information, or the like. A non-limiting example of the address information is a media access control (MAC) address.

BH network 9 may have a mesh structure (hereinafter, may be referred to as a "mesh topology" or a "mesh network") having one CN 3 (#0). The BH network in the present disclosure is not limited to an example of the mesh topology. For example, BH network 9 may have a tree topology in which CN #0 is a root node.

Node 3 can be either the CN or the SN. Whether individual node 3 serves as the CN or the SN may be determined by transmission path quality between nodes, may be determined by negotiation between nodes, may be determined by the size of the node identification information, may be determined by whether or not the node is connected to a backbone network, or may be determined by other methods.

### <Exemplary Internal Configuration of Node>

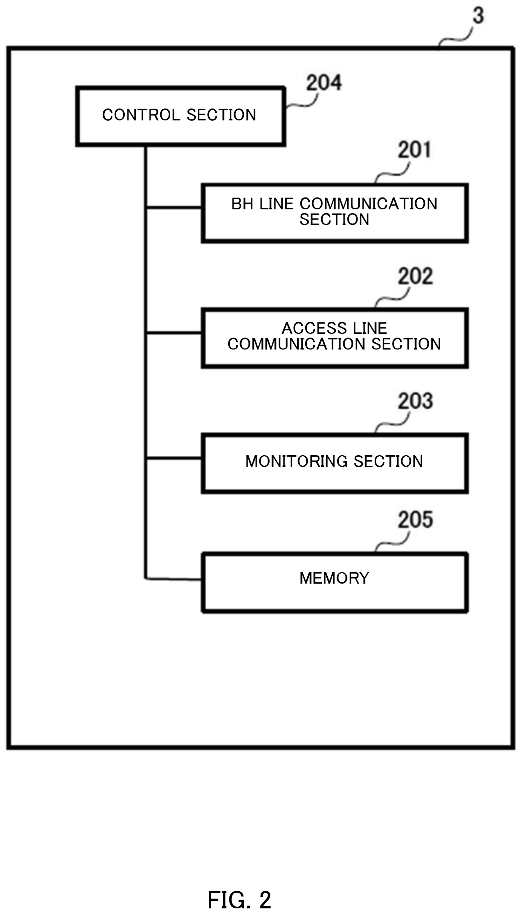

Next, an internal configuration of each node 3 will be described with reference to FIG. 2. Each node 3 includes BH line communication section 201, access line communication section 202, monitoring section 203, control section 204, and memory 205.

BH line communication section 201 communicates with another node 3 on a channel (for example, channel C) used for the BH line. BH line communication section 201 communicates with other nodes using a channel designated by control section 204. In addition, BH line communication section 201 receives each information of "monitoring channel information," "monitoring channel change request," or "radar wave detection information" from other nodes, and broadcasts the information to the neighboring node. Further, BH line communication section 201 monitors, for a radar wave, the channel used for the BH line. Hereinafter, the channel used for the BH line may be referred to as a "BH channel."

Access line communication section 202 communicates with terminal device 7 using a channel used for the access line. Access line communication section 202 communicates with terminal device 7 using a channel designated by control section 204. That is, terminal device 7 and node 3 communicate with each other using the access line, and nodes 3 communicate with each other using the backhaul line. Access line communication section 202 monitors, for a radar wave, the channel used for the access line. The channel used by access line communication section 202 for the access line does not need to be the same for all the nodes and may be different between the nodes.

Monitoring section 203 monitors, for a radar wave, a channel designated by control section 204. Monitoring section 203 may monitor a plurality of channels for a radar wave. The monitoring channel is a channel to be used for the BH line or the access line in a case where a radar wave is detected on a channel used for the BH line or on a channel used for the access line, so that the monitoring channel is set in the same 5 GHz band.

The monitoring for the radar wave performed by BH line communication section 201, access line communication section 202, and monitoring section 203 can be performed, for example, by measuring a signal level of the channel. In this case, BH line communication section 201, access line communication section 202, and monitoring section 203 may determine that "a radar wave is detected" in a case where a signal level equal to or greater than a predetermined value is continuously detected for a predetermined time. In a case where a radar wave is detected, BH line communication section 201, access line communication section 202, and monitoring section 203 notify control section 204 of information indicating the detection of the radar wave (hereinafter, referred to as "radar wave detection information"). In a case where monitoring section 203 monitors a plurality of channels for a radar wave, monitoring section 203 may notify control section 204 of information indicating a channel in which the radar wave is detected.

Control section 204 controls the operation of entire nodes 3. Control section 204 may include a processor. The processor may be, for example, a central processing unit (CPU) or a digital signal processor (DSP).

Control section 204 sets a channel used by BH line communication section 201 and gives an instruction to BH line communication section 201. In addition, control section 204 sets a channel different from the channel used by BH line communication section 201 as a channel used by access line communication section 202 and gives an instruction to access line communication section 202. Further, control section 204 sets a channel other than the channel used by BH line communication section 201 and the channel used by access line communication section 202, and gives an instruction to monitoring section 203.

In addition, control section 204 monitors whether or not BH line communication section 201 receives the "radar wave detection information." In a case where control section 204 detects that BH line communication section 201 receives the "radar wave detection information," control section 204 forwards the received "radar wave detection information" from BH line communication section 201 to the neighboring node.

In a case where node 3 operates as the CN, control section 204 sets a monitoring channel and transmits information on the set monitoring channel (hereinafter, referred to as "monitoring channel information") to the neighboring node from BH line communication section 201. Control section 204 monitors whether or not BH line communication section 201 receives "monitoring channel change request." In a case where control section 204 detects that BH line communication section 201 receives "monitoring channel change request," control section 204 sets a new monitoring channel and transmits the monitoring channel information to the neighboring node from BH line communication section 201.

In a case where node 3 operates as the SN, control section 204 monitors whether or not BH line communication section 201 receives "monitoring channel information" or "monitoring channel change request." In a case where "monitoring channel information" or "monitoring channel change request" is received, control section 204 forwards (transmits) the received "monitoring channel information" or "monitoring channel change request" from BH line communication section 201 to the neighboring node. In a case where "monitoring channel information" is received, control section 204 causes monitoring section 203 to set a monitoring channel included in the received "monitoring channel information."

In a case where control section 204 is notified that a radar wave is detected from BH line communication section 201, control section 204 suspends the use of the channel used by BH line communication section 201 and controls BH line communication section 201 such that a channel being monitored for a radar wave by monitoring section 203 is used by BH line communication section 201 for communication.

In a case where control section 204 is notified that a radar wave is detected from access line communication section 202, control section 204 suspends the use of the channel used by access line communication section 202 and controls access line communication section 202 such that a channel other than the channel used by BH line communication section 201 and the channel being monitored for a radar wave by monitoring section 203 is used by access line communication section 202. Alternatively, control section 204 may control access line communication section 202 such that access line communication section 202 uses the channel being monitored for a radar wave by monitoring section 203, and may cause monitoring section 203 to change the channel being monitored for a radar wave by monitoring section 203 to another channel.

In a case where control section 204 is notified that a radar wave is detected from monitoring section 203, control section 204 may cause monitoring section 203 to change the channel being monitored for a radar wave by monitoring section 203 to another channel. In a case where monitoring section 203 monitors a plurality of channels for a radar wave, control section 204 may cause monitoring section 203 to change a channel on which the radar wave has been detected to another channel, or may cause monitoring section 203 to change all the channels.

Memory 205 stores a program of an operating system (OS) to be executed by the processor, an application program, and various types of data necessary for processing by the processor. The memory may be, for example, a read only memory (ROM), a random access memory (RAM), a flash memory, a solid state drive (SSD), and/or a hard disk drive (HDD).

### <Operation of CN>

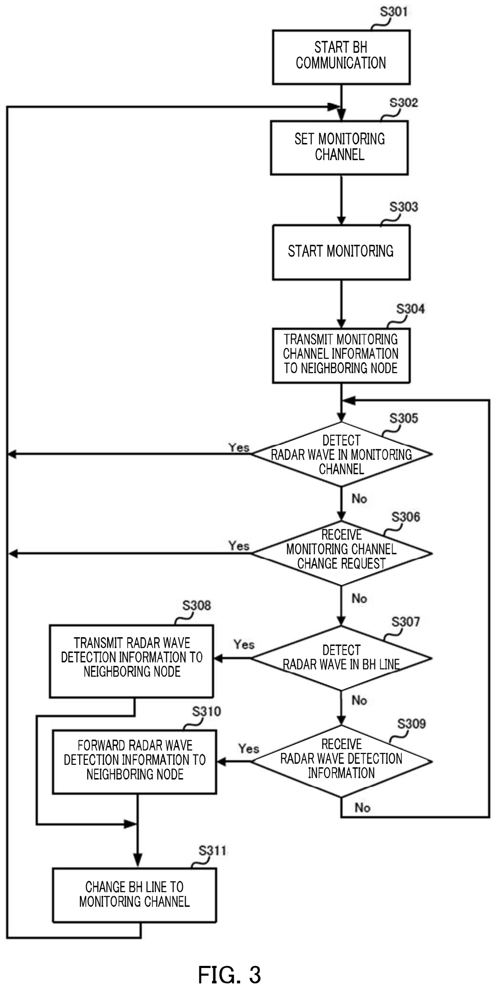

Next, an operation of the CN will be described with reference to the flowchart of FIG. 3.

The CN starts communication on the BH line together with the SN (S301).

During BH communication, the CN sets, as a monitoring channel, a new channel to which a channel currently used for the BH communication is changed if a radar wave is detected on the current channel (S302). The monitoring channel may be set from among available channels in consideration of the congestion degree of the channel, or may be randomly set. The monitoring channel may be set to a channel with a less frequent detection or smaller number of detections of a radar wave, based on a history of detection of the radar wave in the CN and the SN, thereby setting a channel with a high possibility that the radar wave is not detected. The monitoring channel may be set in consideration of a time point at which the radar wave is detected and a current time point. In accordance with the laws and regulations, the channel in which a radar wave has been detected cannot be used for 30 minutes after the detection of the radar wave, so that the channel in which a radar wave was detected within the past 30 minutes may not be set as the monitoring channel. In addition, a plurality of monitoring channels may be set.

The CN starts monitoring on the set channel by the monitoring section (S303).

The CN transmits information indicating the channel started to be monitored to the neighboring node on the BH line as "monitoring channel information" (S304). The transmission of the monitoring channel information may be performed by broadcasting. In a case where a plurality of monitoring channels are set in S302, a plurality of pieces of monitoring channel information, each piece of which includes information indicating one of the plurality of monitoring channels, may be transmitted, or one piece of monitoring channel information including information indicating the plurality of monitoring channels may be transmitted.

The CN determines whether or not a radar wave is detected on the monitoring channel (S305).

In a case where the CN detects a radar wave in S305 (Yes), the flow returns to the monitoring channel setting in S302, and the CN newly sets another monitoring channel. In a case where a plurality of monitoring channels are set in S302, the monitoring channel change request may include information for identifying the monitoring channel for which the change request is made.

In a case where the CN does not detect a radar wave in S305 (No), the CN determines whether or not a monitoring channel change request is received (S306).

In a case where the CN receives a monitoring channel change request in S306 (Yes), the flow returns to the monitoring channel setting in S302, and the CN newly sets another monitoring channel. In a case where a plurality of monitoring channels are set, the monitoring channel change request may include information for identifying the monitoring channel for which the change request is made.

In a case where the CN does not receive a monitoring channel change request in S306 (No), the CN determines whether or not a radar wave is detected on the channel used for the BH line (S307).

In a case where the CN detects a radar wave in S307 (Yes), the CN transmits information indicating detection of the radar wave on the BH channel (hereinafter, referred to as "radar wave detection information") to the neighboring node on the BH line (S308). The transmission of the radar wave detection information may be performed by broadcasting. Since it is necessary to suspend communication within 10 seconds on the BH channel on which the radar wave was detected, it is necessary to transmit the radar wave detection information before suspending communication by the BH channel in order to transmit the radar wave detection information on the BH line.

In a case where the CN does not detect a radar wave in S307 (No), the CN determines whether or not radar wave detection information is received (S309).

In a case where the CN receives radar wave detection information in S309 (Yes), the CN forwards (transmits) the received radar wave detection information to the neighboring node on the BH line (S310). The forwarding of the radar wave detection information may be performed by broadcasting.

In a case where the CN does not receive radar wave detection information in S309 (No), the flow returns to S305, and the CN determines whether or not a radar wave is detected on the monitoring channel.

After transmitting the radar wave detection information to the neighboring node in S308 or after forwarding the radar wave detection information to the neighboring node in S310, the CN changes the channel used for the BH line from the current channel to the monitoring channel (S311). In a case where a plurality of monitoring channels are being monitored, the monitoring channel to which the current channel is changed is determined based on a predetermined condition. The channel to be determined may be a channel on which no radar wave has been detected for the longest or may be a channel having a smallest identification number.

The order of S303 and S304 may be changed. In addition, the order of S305, S306, S307, and S309 may be changed. In addition, in S311, in a case where a monitoring time for the monitoring channel is less than 1 minute, the channel used for the BH line may be changed to the monitoring channel after 1 minute has elapsed.

### <Operation of SN>

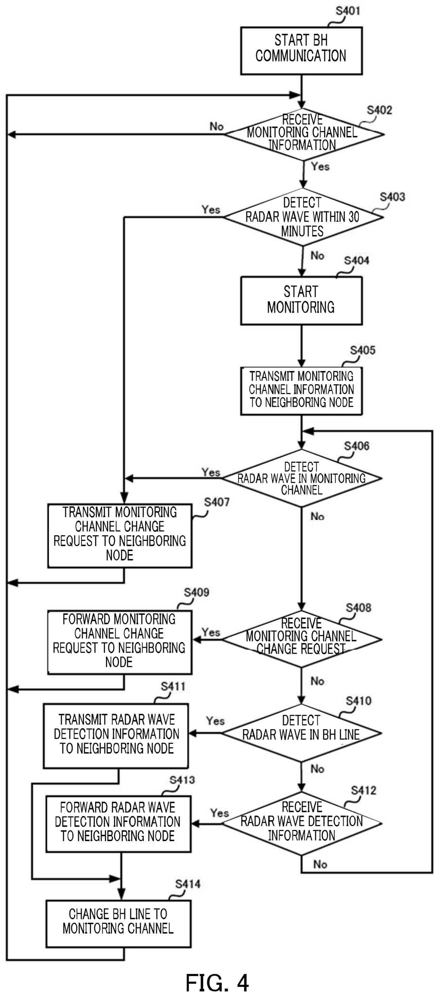

Next, an operation of the SN will be described with reference to the flowchart of FIG. 4.

The SN starts communication on the BH line together with the CN and other SNs (S401).

The SN determines whether or not monitoring channel information is received from the neighboring node (S402).

In a case where the SN does not receive monitoring channel information from the neighboring node in S402 (No), the flow returns to S402, and the SN determines again whether or not the monitoring channel information is received.

In a case where the SN receives monitoring channel information from the neighboring node in S402 (Yes), the SN checks whether or not a radar wave has been detected within the past 30 minutes in a monitoring channel included in the monitoring channel information (S403).

The channel that can be used by node 3 can be used as any of the channel used for the BH line, the channel used for the access line, and the monitoring channel. In a case where a radar wave is detected on the monitoring channel or the channel used for the BH line, the "radar wave detection information" is finally received by the CN by transmitting or forwarding the "radar wave detection information" to the neighboring node via the BH channel. Therefore, since the channel on which the radar wave was detected within the past 30 minutes is not set as the monitoring channel in the monitoring channel setting performed by the CN described in S302 of FIG. 3, the channel is not indicated in the monitoring channel information received by the SN. However, in a case where a radar wave is detected on the channel used for the access line, the radar wave detection information is not transmitted to the neighboring node, so that the CN does not know that the SN detects the radar wave on the channel used for the access line. Therefore, since there is a possibility that the channel which is used by the SN for the access line and on which the radar wave is detected is set as the monitoring channel in the monitoring channel setting in S302, the processing of S403 is necessary. In a case where the SN detects a radar wave on the channel used for the access line, the SN transmits, to the neighboring node via the BH channel, "access line radar wave detection information" indicating that the radar wave is detected on the channel used for the access line, and in a case where the "access line radar wave detection information" is received, the "access line radar wave detection information" is forwarded to the neighboring node, so that the CN can perform the monitoring channel setting in consideration of the fact that the SN detects the radar wave on the channel used for the access line, and thus the processing of S403 is not necessary.

In a case where the SN detects a radar wave within the past 30 minutes in S403 (Yes), the SN transmits the monitoring channel change request to the neighboring node via the BH line (S407). The transmission of the monitoring channel change request may be performed by broadcasting. In a case where a plurality of monitoring channels are received, the monitoring channel change request may include information for identifying the monitoring channel in which the radar wave is detected.

In a case where the SN did not detect a radar wave within the past 30 minutes in S403 (No), the SN starts monitoring on the monitoring channel in monitoring section 203 (S404).

The SN forwards (transmits), to the neighboring node via the BH line, the monitoring channel information on the channel started to be monitored (S405). The forwarding of the monitoring channel information may be performed by broadcasting.

The SN determines whether or not a radar wave is detected on the monitoring channel (S406).

In a case where the SN detects a radar wave on the monitoring channel in S406 (Yes), the SN transmits a monitoring channel change request to the neighboring node via the BH line (S407). The transmission of the monitoring channel change request may be performed by broadcasting. After the SN transmits the monitoring channel change request to the neighboring node via the BH line in S407, the flow returns to S402, and the SN determines whether or not the monitoring channel information is received.

In a case where the SN does not detect a radar wave on the monitoring channel in S406 (No), the SN determines whether or not a monitoring channel change request is received (S408).

In a case where the SN receives the monitoring channel change request in S408 (Yes), the SN forwards (transmits) the monitoring channel change request to the neighboring node via the BH line (S409). The forwarding of the monitoring channel change request may be performed by broadcasting. After the SN transmits the monitoring channel change request to the neighboring node via the BH line in S409, the flow returns to S402, and the SN determines again whether or not the monitoring channel information is received.

In a case where the SN does not receive a monitoring channel change request in S408 (No), the SN determines whether or not a radar wave is detected on the channel used for the BH line (S410).

In a case where the SN detects a radar wave in S410 (Yes), the SN transmits the radar wave detection information to the neighboring node via the BH line (S411). The transmission of the radar wave detection information may be performed by broadcasting. Since it is necessary to suspend, within 10 seconds, communication on the channel used for the BH line on which the radar wave has been detected, it is necessary to transmit the radar wave detection information before suspending communication via the BH channel, in order to transmit the radar wave detection information on the BH line.

In a case where the SN does not detect a radar wave in S410 (No), the SN determines whether or not radar wave detection information is received (S412).

In a case where the SN receives radar wave detection information in S412 (Yes), the SN forwards (transmits) the radar wave detection information to the neighboring node via the BH line (S413). The forwarding of the radar wave detection information may be performed by broadcasting.

In a case where the SN does not receive radar wave detection information in S412 (No), the flow returns to S406, and the SN determines whether or not a radar wave is detected on the monitoring channel.

After transmitting the radar wave detection information to the neighboring node in S411 or after forwarding the radar wave detection information to the neighboring node in S413, the SN changes the channel used for the BH line from the current channel to the monitoring channel (S414). In a case where a plurality of monitoring channels are being monitored, the monitoring channel to which the current channel is changed is determined based on a predetermined condition. The channel to be determined may be a channel on which no radar wave has been detected for the longest or may be a channel having a smallest identification number. After the SN changes the channel used for the BH line from the current channel to the monitoring channel in S414, the flow returns to S402, and the SN determines again whether or not the monitoring channel information is received.

The order of S403, S404, and S405 may be changed. In addition, the order of S406, S408, S410, and S412 may be changed. In addition, in S414, in a case where a monitoring time for the monitoring channel is less than 1 minute, the channel used for the BH line may be changed to the monitoring channel after 1 minute has elapsed.

### <Operation of Each Node>

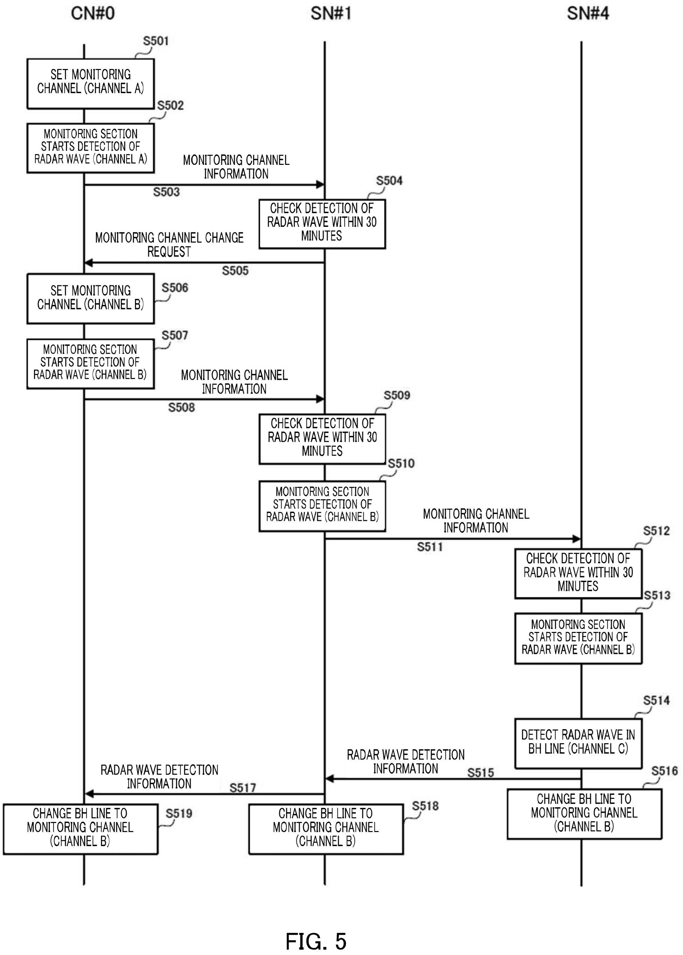

FIG. 5 shows an example of a sequence diagram showing operations of CN #0, SN #1, and SN #4 among the nodes constituting the wireless communication system shown in FIG. 1. CN #0 performs the operation described in FIG. 3, and SN #1 and SN #4 perform the operation described in FIG. 4. CN #0 and SN #1 are neighboring nodes, and SN #1 and SN #4 are neighboring nodes, but CN #0 and SN #4 are not neighboring nodes. Therefore, CN #0 and SN #4 can communicate with each other via relaying by SN #1.

Hereinafter, an exemplary operation will be described in which channel A is set as a monitoring channel while channel C is used for the BH line, SN #1 then detects a radar wave on channel A, so that the monitoring channel is changed to channel B, and channel C is changed to channel B in a case where a radar wave is detected on channel C.

CN #0 sets a monitoring channel (for example, channel A) (S501).

CN #0 causes monitoring section 203 to monitor the set monitoring channel (for example, channel A) for a radar wave (S502).

CN #0 transmits "monitoring channel information" on the set monitoring channel (for example, channel A) to the neighboring node (S503). The transmission may be performed by broadcasting.

SN #1, which is a neighboring node of CN #0, receives the "monitoring channel information."

SN #1 checks whether or not a radar wave has been detected within the past 30 minutes on the monitoring channel (for example, channel A) indicated by the received "monitoring channel information" (S504). Since 30 minutes is a time designated by the laws and regulations, the time may be changed in accordance with the change in the laws and regulations.

It is assumed that SN #1 has detected a radar wave within the past 30 minutes on the monitoring channel (for example, channel A) indicated by "monitoring channel information (for example, channel A)". That is, SN #1 detected the radar wave on channel A used for the access line within the past 30 minutes. In this case, SN #1 transmits a "monitoring channel change request" to the neighboring node to request CN #0 to change the set monitoring channel (S505). The "monitoring channel change request (for example, change request of channel A)" transmitted in S505 can be identified as the "monitoring channel change request (for example, change request of channel A)" related to "monitoring channel information (for example, channel A)" transmitted in S503.

In a case where the "monitoring channel change request (for example, change request of channel A)" is received, CN #0 performs the monitoring channel setting to set a new monitoring channel (for example, channel B) (S506). The "monitoring channel change request (for example, change request of channel A)" transmitted by SN #1 is also received by SN #4, but SN #4 ignores the received "monitoring channel change request (for example, change request of channel A)" because SN #4 does not receive "monitoring channel information (for example, channel A)" related to the received "monitoring channel change request (for example, change request of channel A)."

CN #0 causes the monitoring section to start monitoring on the set new monitoring channel (for example, channel B) (S507).

CN #0 transmits the newly set "monitoring channel information (for example, channel B)" to the neighboring node (S508). The transmission of the monitoring channel information may be performed by broadcasting. The monitoring channel information transmitted in S508 can be identified by a sequence number or the like as "monitoring channel information (for example, channel B)" different from the "monitoring channel information (for example, channel A)" transmitted in S503.

SN #1 checks whether or not a radar wave has been detected within the past 30 minutes on the monitoring channel (for example, channel B) indicated by the "monitoring channel information (for example, channel B)" (S509). Since 30 minutes is a time designated by the laws and regulations, the time may be changed in accordance with the change in the laws and regulations.

It is assumed that SN #1 has not detected any radar wave within the past 30 minutes on the monitoring channel (for example, channel B) indicated by the "monitoring channel information (for example, channel B)". In this case, SN #1 starts monitoring on the monitoring channel (for example, channel B) indicated by the indicated "monitoring channel information (for example, channel B)" (S510). SN #1 may transmit notification of not detecting a radar wave within the past 30 minutes to CN #0 that has transmitted the monitoring channel information.

SN #1 forwards the "monitoring channel information (for example, channel B)" to the neighboring node (S511). The "monitoring channel information (for example, channel B)" forwarded in S511 can be identified by a sequence number or the like as the forwarding of "monitoring channel information (for example, channel B)" transmitted in S508.

SN #4, which is a neighboring node of SN #1, receives the "monitoring channel information (for example, channel B)." The "monitoring channel information (for example, channel B)" forwarded in S511 is also received by CN #0, but CN #0 ignores the received "monitoring channel information (for example, channel B)" because the "monitoring channel information (for example, channel B)" is the information transmitted by CN #0 itself and then forwarded.

SN #4 checks whether or not a radar wave has been detected within the past 30 minutes on the monitoring channel (for example, channel B) indicated by the "monitoring channel information (for example, channel B)" (S512). Since 30 minutes is a time designated by the laws and regulations, the time may be changed in accordance with the change in the laws and regulations.

It is assumed that SN #4 has not detected any radar wave within the past 30 minutes on the monitoring channel (for example, channel B) indicated by the "monitoring channel information (for example, channel B)". In this case, SN #4 starts monitoring on the monitoring channel (for example, channel B) indicated by the "monitoring channel information (for example, channel B)" (S513).

SN #4 detects a radar wave on the BH channel (for example, channel C) (S514).

SN #4 transmits the "radar wave detection information" to the neighboring node to notify the nodes constituting the BH communication network that the radar wave has been detected on the BH channel (for example, channel C) (S515), and changes the BH channel used for the BH line from the channel currently being used (for example, channel C) to the monitoring channel (for example, channel B) (S516).

SN #1 receives the "radar wave detection information" and forwards the "radar wave detection information" (S517), and changes the BH channel used for the BH line from the channel currently being used (for example, channel C) to the monitoring channel (for example, channel B) (S518). The "radar wave detection information" forwarded in S517 can be identified by a sequence number or the like as the forwarding of "radar wave detection information" transmitted in S515.

CN #0 receives the "radar wave detection information," forwards the "radar wave detection information," and changes the BH channel used for the BH line from the channel currently being used (for example, channel C) to the monitoring channel (for example, channel B) (S519). The "radar wave detection information" transmitted by SN #1 in S517 is also received by SN #4, but SN #4 ignores the received "radar wave detection information" because the "radar wave detection information" is the information transmitted by SN #4 itself and then forwarded. In addition, CN #0 forwards the "radar wave detection information" received in S517 to the neighboring node, but SN #1 ignores the received "radar wave detection information" because the "radar wave detection information" is the information transmitted by SN #1 itself and then forwarded.

The same applies to the SN not shown in FIG. 5.

### <Summary of Embodiment>

As described above, all nodes 3 constituting the wireless backhaul system use channel C as the BH channel and use channel B as the monitoring channel. Accordingly, in a case where one node 3 (for example, SN #4) detects a radar wave on channel C, each node 3 suspends the use of channel C, which is currently being used as the BH channel, and uses channel B, which is the monitoring channel. Then, all nodes 3 constituting the wireless backhaul communication system use channel B, which is the monitoring channel, as the BH channel. That is, in a case where all the nodes monitor the same monitoring channel and a radar wave is detected by any one of nodes 3 constituting the wireless backhaul system, all nodes 3 switch the channel used for the backhaul line to the same monitoring channel. Thus, the high-speed DFS in the wireless backhaul communication system can be realized.

### <Variation>

The monitoring section may monitor a plurality of channels. In a case where a plurality of channels are monitored, the "monitoring channel change request" may include a channel in which the radar wave has been detected.

In a case where a radar wave is detected on a channel (for example, channel D) used by the access line communication section, the nodes may use a monitoring channel (for example, channel A) being monitored by the monitoring section in the access line communication section, and may set the monitoring channel or transmit a monitoring channel change request in order to change the monitoring channel. An "access line monitoring section" for performing high-speed DFS on the access line may be provided in each node, and the channel used for the access line may be changed from the channel currently being used (for example, channel D) to an access line monitoring channel (for example, channel E) being monitored by the access line monitoring section. The channel being monitored by the access line monitoring section may be a channel (for example, channel E) other than the channel used by the BH line communication section (for example, channel C), the channel used by the access line communication section (for example, channel D), and the channel being monitored by the monitoring section (for example, channel A).

The SN may notify the CN of the channel used by the access line communication section, through notification, to a neighboring node, of the channel used by the access line communication section as "access line channel information" and notification, to a neighboring node, of the received "access line channel information." Alternatively, the "monitoring channel change request" may be transmitted in a case where the channel used by the access line communication section is notified by the "monitoring channel information."

In a case where the channel indicated by the "monitoring channel information" is the channel used by the SN for the access line, the "monitoring channel change request" may be transmitted or the channel used for the access line may be changed.

Node 3 may include a module for a 5G (fifth generation mobile phone) access point. A channel (for example, channel A) being monitored by the monitoring section may be a change destination channel in a case where a radar wave is detected by the module for the 5G access point. A "5G monitoring section" may be provided in the node including the module for the 5G access point to perform monitoring in the same manner as the access line monitoring section.

In a case where a radar wave is detected in a specific time period, the channel used for the BH communication may be changed based on a time. A channel used for the BH communication after a predetermined time may be monitored before the predetermined time.

In a case where the BH line communication section cannot receive the BH communication, it can be determined that the BH channel is switched or the BH channel is failed, and other channels can be sequentially scanned, and the monitoring channel can be set as a channel to be first scanned.
(1) A node used in a wireless backhaul system according to one exemplary embodiment of the present disclosure includes: an access line communication section that communicates with a terminal device using a first channel; a backhaul line communication section that communicates with a neighboring node using a second channel and that transmits monitoring channel information indicating a third channel to the neighboring node; and a monitoring section that monitors the third channel for a radar wave.
(2) The node used in a wireless backhaul system according to one exemplary embodiment of the present disclosure is the node according to (1) further including: a control section that sets the third channel.
(3) The node used in a wireless backhaul system according to one exemplary embodiment of the present disclosure is the node according to (2), in which the control section sets the third channel based on a past history.
(4) The node used in a wireless backhaul system according to one exemplary embodiment of the present disclosure is the node according to (1), in which in response to the backhaul line communication section receiving the monitoring channel information from one neighboring node, the backhaul line communication section forwards the monitoring channel information to a neighboring node.
(5) The node used in a wireless backhaul system according to one exemplary embodiment of the present disclosure is the node according to (4) further including: a control section that checks whether a radar wave has been detected within a past predetermined time period on the third channel indicated by the monitoring channel information received.
(6) The node used in a wireless backhaul system according to one exemplary embodiment of the present disclosure is the node according to any one of (1) to (4), in which the transmission or forwarding of the monitoring channel information is performed by broadcasting.
(7) The node used in a wireless backhaul system according to one exemplary embodiment of the present disclosure is the node according to (1) further including: a control section that, in response to the backhaul line communication section detecting a radar wave or in response to receiving information indicating detection of a radar wave by the backhaul line communication section, causes the backhaul line communication section to transmit the information indicating the detection of the radar wave to the neighboring node and causes the backhaul line communication section to perform channel change such that the third channel is used.
(8) A wireless backhaul communication system according to one exemplary embodiment of the present disclosure includes: a first node including: a first access line communication section that communicates with a terminal device using a first channel, a first backhaul line communication section that communicates with a neighboring node using a second channel, a first monitoring section that monitors a third channel for a radar wave, and a first control section that sets the third channel and causes the first backhaul line communication section to transmit monitoring channel information indicating the third channel to the neighboring node; and a second node including a second access line communication section that communicates with a terminal device using a fourth channel, a second backhaul line communication section that communicates with a neighboring node using the second channel, a second monitoring section that monitors the third channel for the radar wave, and a second control section that, in a case where the second backhaul line communication section receives the monitoring channel information indicating the third channel, causes the second backhaul line communication section to forward the monitoring channel information to the neighboring node.
(9) A wireless backhaul communication system according to one exemplary embodiment of the present disclosure includes a plurality of nodes that perform communication with each other using a common channel, in which each of the plurality of nodes includes: a communication section that communicates with a neighboring node using a specific common channel, a monitoring section that monitors a monitoring channel different from the specific common channel that is being used, and a control section that, in a case where a radar wave is detected on the specific common channel that is being used by the communication section, performs channel change such that the monitoring channel is used by the communication section, and causes the communication section to transmit, to the neighboring node, information indicating detection of the radar wave on the specific common channel that is being used.
(10) The wireless backhaul communication system according to one exemplary embodiment of the present disclosure is the wireless backhaul communication system according to (9), in which: the detection of the radar wave on the specific common channel that is being used by the communication section is any of detection of the radar wave by the communication section or reception of information from the neighboring node, the information indicating the detection of the radar wave.
(11) A method according to one exemplary embodiment of the present disclosure performed by each of a plurality of nodes of a wireless backhaul communication system including the plurality of nodes that perform communication with each other using a common channel includes: transmitting monitoring channel information to a neighboring node, the monitoring channel information indicating a monitoring channel different from the common channel that is being used; and monitoring the monitoring channel.
(12) The method according to one exemplary embodiment of the present disclosure is the method according to (11) further including: transmitting, to the neighboring node, information indicating detection of a radar wave on the common channel that is being used, in a case where the radar wave is detected on the common channel that is being used or in a case where the information indicating the detection of the radar wave on the common channel that is being used is received from a neighboring node; and performing channel change to communicate with the neighboring node using the monitoring channel.
(13) A program according to one exemplary embodiment of the present disclosure causes a processor of a node to execute the method according to (11) or (12).
(14) A node used in a wireless backhaul system according to one exemplary embodiment of the present disclosure includes: a backhaul line communication section that communicates with a neighboring node using a first channel and that transmits monitoring channel information indicating a second channel to the neighboring node; and a monitoring section that monitors the second channel for a radar wave.

The disclosure of Japanese Patent Application No. 2023-004570, filed on January 16, 2023, including the specification, drawings and abstract, is incorporated herein by reference in its entirety.

### Industrial Applicability

The present disclosure is useful for a wireless backhaul system used in a wireless mesh network or the like.

### Reference Signs List

1 Wireless communication system
3 Node
7 Terminal device
9 BH network
201 BH line communication section
202 Access line communication section
203 Monitoring section
204 Control section
205 Memory

## Claims

1. A node used in a wireless backhaul system, the node comprising:
an access line communication section that communicates with a terminal device using a first channel;
a backhaul line communication section that communicates with a neighboring node using a second channel and that transmits monitoring channel information indicating a third channel to the neighboring node; and
a monitoring section that monitors the third channel for a radar wave.

2. The node according to claim 1, further comprising:
a control section that sets the third channel.

3. The node according to claim 2, wherein
the control section sets the third channel based on a past history.

4. The node according to claim 1, wherein
in response to the backhaul line communication section receiving the monitoring channel information from one neighboring node, the backhaul line communication section forwards the monitoring channel information to a neighboring node.

5. The node according to claim 4, further comprising:
a control section that checks whether a radar wave has been detected within a past predetermined time period on the third channel indicated by the monitoring channel information received.

6. The node according to claim 1, wherein
the transmission or forwarding of the monitoring channel information is performed by broadcasting.

7. The node according to claim 1, further comprising:
a control section that, in response to the backhaul line communication section detecting a radar wave or in response to receiving information indicating detection of a radar wave by the backhaul line communication section, causes the backhaul line communication section to transmit the information indicating the detection of the radar wave to the neighboring node and causes the backhaul line communication section to perform channel change such that the third channel is used.

8. A wireless backhaul communication system, comprising:
a first node including:
a first access line communication section that communicates with a terminal device using a first channel,
a first backhaul line communication section that communicates with a neighboring node using a second channel,
a first monitoring section that monitors a third channel for a radar wave, and
a first control section that sets the third channel and causes the first backhaul line communication section to transmit monitoring channel information indicating the third channel to the neighboring node; and
a second node including:
a second access line communication section that communicates with a terminal device using a fourth channel,
a second backhaul line communication section that communicates with a neighboring node using the second channel,
a second monitoring section that monitors the third channel for the radar wave, and
a second control section that, in a case where the second backhaul line communication section receives the monitoring channel information indicating the third channel, causes the second backhaul line communication section to forward the monitoring channel information to the neighboring node.

9. A wireless backhaul communication system including a plurality of nodes that perform communication with each other using a common channel, wherein
each of the plurality of nodes includes:
a communication section that communicates with a neighboring node using a specific common channel,
a monitoring section that monitors a monitoring channel different from the specific common channel that is being used, and
a control section that, in a case where a radar wave is detected on the specific common channel that is being used by the communication section, performs channel change such that the monitoring channel is used by the communication section, and causes the communication section to transmit, to the neighboring node, information indicating detection of the radar wave on the specific common channel that is being used.

10. The wireless backhaul communication system according to claim 9, wherein
the detection of the radar wave on the specific common channel that is being used by the communication section is any of detection of the radar wave by the communication section or reception of information from the neighboring node, the information indicating the detection of the radar wave.

11. A method for each of a plurality of nodes of a wireless backhaul communication system including the plurality of nodes that perform communication with each other using a common channel, the method comprising:
transmitting monitoring channel information to a neighboring node, the monitoring channel information indicating a monitoring channel different from the common channel that is being used; and
monitoring the monitoring channel.

12. The method according to claim 11, further comprising:
transmitting, to the neighboring node, information indicating detection of a radar wave on the common channel that is being used, in a case where the radar wave is detected on the common channel that is being used or in a case where the information indicating the detection of the radar wave on the common channel that is being used is received from a neighboring node; and
performing channel change to communicate with the neighboring node using the monitoring channel.

13. A program for causing a processor of a node to execute the method according to claim 11.

14. A node used in a wireless backhaul system, the node comprising:
a backhaul line communication section that communicates with a neighboring node using a first channel and that transmits monitoring channel information indicating a second channel to the neighboring node; and
a monitoring section that monitors the second channel for a radar wave.
